(19) Europäisches Patentamt / European Patent Office / Office européen des brevets

(11) **EP 3 079 902 B1**

(12) **EUROPÄISCHE PATENTSCHRIFT**

(45) Veröffentlichungstag und Bekanntmachung des Hinweises auf die Patenterteilung:
**27.10.2021 Patentblatt 2021/43**

(21) Anmeldenummer: **14795828.4**

(22) Anmeldetag: **10.11.2014**

(51) Int Cl.:
**B32B 17/10** (2006.01)    **G02B 27/01** (2006.01)

(86) Internationale Anmeldenummer:
**PCT/EP2014/074116**

(87) Internationale Veröffentlichungsnummer:
**WO 2015/086234 (18.06.2015 Gazette 2015/24)**

(54) **THERMOPLASTISCHE FOLIE FÜR EINE VERBUNDGLAS-SCHEIBE MIT NICHTLINEAR-KONTINUIERLICHER KEILEINLAGE IN VERTIKALER RICHTUNG**

THERMOPLASTIC FILM FOR A COMPOSITE GLASS SHEET WITH A NON-LINEAR CONTINUOUS WEDGE INSERT IN VERTICAL DIRECTION

FEUILLE THERMOPLASTIQUE POUR VITRE EN VERRE FEUILLETÉ AVEC INSERTION DE CALE NON LINÉAIRE, CONTINU, ORIENTÉ VERTICALEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.12.2013 EP 13196872**

(43) Veröffentlichungstag der Anmeldung:
**19.10.2016 Patentblatt 2016/42**

(73) Patentinhaber: **SAINT-GOBAIN GLASS FRANCE**
**92400 Courbevoie (FR)**

(72) Erfinder:
• **ARNDT, Martin**
**52066 Aachen (DE)**
• **GOSSEN, Stefan**
**52072 Aachen (DE)**

(74) Vertreter: **Gebauer, Dieter Edmund**
**Splanemann**
**Patentanwälte Partnerschaft**
**Rumfordstraße 7**
**80469 München (DE)**

(56) Entgegenhaltungen:
**US-A1- 2007 148 472    US-A1- 2010 314 900**
**US-A1- 2011 189 426**

**Beschreibung**

Die Erfindung betrifft eine thermoplastische Folie für eine Verbundglas-Scheibe mit abschnittsweiser nichtlinear-kontinuierlicher Keileinlage in vertikaler Richtung.

Verbundglas-Scheiben werden heute an vielen Orten, insbesondere im Fahrzeugbau, verwendet. Dabei ist der Begriff Fahrzeug weit gefasst und betrifft unter anderem Straßenfahrzeuge, Flugzeuge, Schiffe, landwirtschaftliche Maschinen oder auch Arbeitsgeräte. Auch in anderen Bereichen werden Verbundglas-Scheiben verwendet. Hierzu zählen beispielsweise Gebäude-Verglasungen als auch Informationsdisplays, z.B. in Museen oder als Werbedisplays. Dabei weist eine Verbundglas-Scheibe im Allgemeinen zwei Glasflächen auf, die auf eine Zwischenschicht laminiert sind. Die Glasflächen selbst können eine Krümmung aufweisen und sind in aller Regel von konstanter Dicke. Die Zwischenschicht weist in aller Regel ein thermoplastisches Material, in aller Regel Polyvinylbutyral (PVB), einer vorbestimmten Dicke, z.B. 0.76 mm, auf.

Da die Verbundglas-Scheibe im Allgemeinen in Bezug auf einen Betrachter geneigt ist, kommt es zu Doppelbildern. Diese Doppelbilder sind dadurch bedingt, dass einfallendes Licht in aller Regel nicht vollständig durch beide Glasflächen tritt, sondern dass zumindest ein Teil des Lichtes reflektiert wird und danach durch die zweite Glasfläche tritt.

Diese Doppelbilder sind insbesondere bei Dunkelheit wahrnehmbar, insbesondere bei starken, einstrahlenden Lichtquellen, wie z.B. die Scheinwerfer eines entgegenkommenden Fahrzeugs. Diese Doppelbilder sind extrem störend.

Häufig wird die Verbundglas-Scheibe auch als Head-Up-Display (HUD) zur Anzeige von Informationen verwendet. Dabei wird mittels einer Projektionseinrichtung ein Bild auf die Verbundglas-Scheibe projiziert, um dem Betrachter eine Information ins Sichtfeld einzublenden. Im Fahrzeugbereich wird die Projektionseinrichtung z.B. auf dem Armaturenbrett angeordnet, sodass das projizierte Bild auf der nächstliegenden Glasfläche der zum Betrachter geneigten Verbundglas-Scheibe in Richtung des Betrachters reflektiert wird. Wiederum tritt ein Teil des Lichts in die Verbundglas-Scheibe ein und wird z.B. an der inneren Grenzschicht der vom Betrachter aus gesehen weiter außen liegenden Glasfläche und der Zwischenschicht reflektiert und tritt versetzt aus der Verbundglas-Scheibe aus. Auch hier tritt ein ähnlicher Effekt, der Effekt der Geisterbilder, in Bezug auf das darzustellende Bild auf. Dies führt dazu, dass der jeweilige Betrachter irritiert wird oder im schlimmsten Fall eine Fehlinformation erhält.

Bislang wird versucht dieses Problem dadurch zu lösen, dass die Oberflächen der Glasflächen nicht mehr parallel, sondern unter einem festen Winkel angeordnet werden. Dies wird z.B. dadurch erreicht, dass die Zwischenschicht eine linear ansteigende und/oder abnehmende Dicke aufweist. Im Fahrzeugbau wird typischerweise die Dicke so variiert, dass am unteren Ende der Scheibe hin zum Motorraum die kleinste Dicke vorgesehen ist, während die Dicke hin zum Dach linear ansteigt. D.h. die Zwischenschicht weist eine Keilform auf.

Die Patentanmeldung US 2010/0314900 A1 zeigt eine Scheibe mit Keileinlage mit einer linearen Änderung des Keilwinkels in vertikaler Richtung, wobei der Keilwinkel mit zunehmender Entfernung vom unteren Rand kleiner wird.

Es zeigt sich jedoch, dass die bisherigen Keilwinkelverläufe nur unzureichend Geisterbilder von Head-Up Displays minimieren können. Ausgehend von dieser Situation ist es eine Aufgabe der Erfindung eine Verbesserung in Bezug auf Doppelbilder als auch Geisterbilder bereitzustellen.

Die Aufgabe wird gelöst, durch eine thermoplastische Folie für eine Verbundglas-Scheibe mit abschnittsweiser nichtlinear-kontinuierlicher Keileinlage in vertikaler Richtung, wobei die Verbundglas-Scheibe in vertikaler Richtung an einem unteren Ende aus der Sicht eines Betrachters weiter vom Betrachter entfernt ist als an einem oberen Ende, wobei die thermoplastische Folie bei einer hiermit ausgerüsteten Verbundglas-Scheibe zwischen zwei Glas-Schichten befindlich ist.

Mit Keileinlage wird eine Einlage, insbesondere eine thermoplastische Folie, mit einer nichtkonstanten Dicke bezeichnet. Diese Bezeichnung ist auf dem Fachgebiet üblich. Der Keilwinkel ist dabei der an einer Stelle gemessene Winkel zwischen den Oberflächen der Einlage. Die Keileinlage ist nichtlinear-kontinuierlich in Bezug auf die Dicke. Die Keileinlage beziehungsweise thermoplastische Folie weist einen nichtlinear-kontinuierlichen Verlauf/Änderung der Dicke auf. Eine linear-kontinuierliche Änderung würde einem herkömmlichen konstanten Keilwinkel entsprechen. Eine nichtlinear-kontinuierliche Änderung ergibt sich aus einem nicht konstanten Keilwinkelprofil, wobei der Keilwinkel ortsabhängig ist. Das Keilwinkelprofil kann dabei linear oder nicht-linear sein.

Mit "abschnittsweise" ist gemeint, dass der beschriebene Verlauf auf mindestens einen Abschnitt der Einlage zutrifft. Insbesondere kann die Einlage mehrere Abschnitte aufweisen, die sich im Verlauf des Keilwinkelprofils unterscheiden.

Die thermoplastische Folie weist zumindest abschnittsweise in vertikaler Richtung ein kontinuierliches nicht-lineares Keilwinkelprofil auf, wobei das nicht-lineare Keilwinkelprofil einen ersten Abschnitt aufweist, der zur Vermeidung von Geisterbildern in Transmission einen konstanten oder zumindest abschnittsweise variablen Keilwinkel aufweist. Das nicht-lineare Keilwinkelprofil weist weiterhin einen zweiten Abschnitt auf, der an den ersten Abschnitt anschließt, wobei der zweite Abschnitt zur Vermeidung von Geisterbildern in Reflexion einen variablen Keilwinkel aufweist, wobei der Keilwinkel von einem unteren Ende zu einem oberen Ende eine Funktion des Abstands zum unteren Ende oder zum oberen Ende ist, wobei die Funktion eine Funktion zumindest zweiten Grades ist, wobei der zweite Abschnitt im Wesentlichen Geisterbilder eines Head-Up-Display minimiert. Das Keilwinkelprofil weist weiterhin einen dritten Abschnitt auf, der an den zweiten Abschnitt anschließt, wobei der dritte Abschnitt zur Vermeidung von Geisterbildern in Transmission einen konstanten oder zumindest abschnittsweise variablen Keilwinkel aufweist, wobei ein Keilwinkel im dritten Abschnitt im Wesentlichen gleich oder größer ist als der Keilwinkel am unteren Ende des ersten Abschnittes.

In einer Weiterbildung der Erfindung enthält die thermoplastische Folie zumindest einen Stoff ausgewählt aus der Gruppe aufweisend Polybutylenterephthalat (PBT), Polycarbonat (PC), Polyethylenterephthalat (PET) und Polyethylennaphthalat (PEN), Polyvinylchlorid (PVC), Polyvinylfluoride (PVF), Polyvinylbutyral (PVB), Ethylenvinylacetat (EVA), Polyacrylat (PA), Polymethylmethacrylat (PMMA), Polyurethan (PUR), und/oder Gemische und Copolymere davon.

Gemäß der Erfindung ist in vertikaler Richtung der Keilwinkel am unteren Rand geringer als der Keilwinkel am oberen Rand.

In einer weiteren Form der Erfindung ist zwischen dem ersten Abschnitt und dem zweiten Abschnitt ein Übergangsbereich vorgesehen, in dem der Keilwinkel entsprechend den Anforderungen an den ersten Abschnitt und den zweiten Abschnitt gleitend ineinander überführt wird.

Gemäß einer Weiterbildung der Erfindung ist zwischen dem zweiten Abschnitt und dem dritten Abschnitt ein Übergangsbereich vorgesehen, in dem der Keilwinkel entsprechend den Anforderungen an den zweiten Abschnitt und den dritten Abschnitt gleitend ineinander überführt wird.

In einer weiteren Ausführungsform der thermoplastischen Folie werden im zweiten Abschnitt $A_2$ die Anforderungen an eine Optimierung des Keilwinkels in Bezug auf Doppelbilder in Transmission und Geisterbilder in Reflektion durch Bildung einer Approximation ermittelt. Dabei können unterschiedliche Ansätze von Ausgleichsmodellen verwendet werden.

Gemäß einer weiteren Ausführungsform der Erfindung verringert der variable Keilwinkelverlauf im zweiten Abschnitt sowohl Geisterbilder in Reflexion als auch Doppelbilder in Transmission, wobei der Keilwinkelverlauf im zweiten Abschnitt nur weniger als 0.35 mrad, bevorzugt weniger als 0.25 mrad, weiter bevorzugt 0.15 mrad, besonders bevorzugt 0.1 mrad, von einem Keilwinkelverlauf optimiert zur Vermeidung von Geisterbildern in Transmission abweicht.

In einer weiteren Ausführungsform der Erfindung ist in einem Übergangsbereich zwischen dem ersten Abschnitt $A_1$ und dem zweiten Abschnitt $A_2$ und/oder dem zweiten Abschnitt $A_2$ und dem dritten Abschnitt $A_2$ der Keilwinkelverlauf so, dass der Keilwinkel weniger als 0.2 mrad, bevorzugt 0.15 mrad, besonders bevorzugt 0.1 mrad, von einem Keilwinkelverlauf optimiert zur Vermeidung von Geisterbildern in Transmission abweicht.

Gemäß einer weiteren Ausführungsform der Erfindung weist die thermoplastische Folie F am unteren Rand eine Dicke von weniger als 1 mm, bevorzugt weniger als 0.9 mm, und bevorzugt eine Dicke von mehr als 0.3 mm, insbesondere mehr als 0.6 mm, am unteren Ende auf.

In einer Ausgestaltung der Erfindung weist die thermoplastische Folie eine geräuschmindernde Wirkung auf. Dadurch kann die Transmission von Geräuschen durch eine mit der Folie versehenen Verbundscheibe vorteilhaft verringert werden, wodurch eine Störung durch Umgebungsgeräusche und Fahrgeräusche vermindert werden kann. Eine solche Wirkung kann durch eine mehrlagige, beispielsweise dreilagige thermoplastische Folie erreicht werden, wobei die innere Lage eine höhere Plastizität oder Elastizität aufweist als die sie umgebenden äußeren Lagen, beispielsweise infolge eines höheren Anteils an Weichmachern.

In einer Ausgestaltung der Erfindung kann die thermoplastische Folie mindestens einen getönten Bereich aufweisen. Ein solche getönter Bereich an der oberen Kante der Scheibe ist dem Fachmann beispielsweise als "shaded band" bekannt - hierdurch kann eine Störung des Fahrers durch blendende Sonnenstrahlung vermindert werden.

Die thermoplastische Zwischenschicht kann in einer Ausgestaltung der Erfindung eine Sonnen- oder Wärmeschutzfunktion aufweisen. Beispielweise kann die thermoplastische Zwischenschicht eine reflektierende Beschichtung im Infrarot-Bereich oder IR-absorbierende Zusätze enthalten. Die Beschichtung oder Zusätze können auf beziehungsweise in der erfindungsgemäßen thermoplastischen Folie mit Keilwinkel angeordnet sein. Alternativ kann eine weitere thermoplastische Folie, beispielweise eine beschichtete PET-Folie, in die thermoplastische Zwischenschicht eingebracht werden.

In einer Ausgestaltung der erfindungsgemäßen Verbundscheibe kann die erste oder die zweite Glasscheibe eine funktionelle Beschichtung aufweisen, bevorzugt auf ihrer zur thermoplastischen Folie hingewandten Oberfläche. Solche funktionelle Beschichtungen sind dem Fachmann geläufig, beispielsweise elektrisch leitfähige Beschichtungen, heizbare Beschichtungen, IR-reflektierende Beschichtungen, Beschichtungen niedriger Emissivität, Antireflexbeschichtung, farbgebende Beschichtungen.

In einer Ausgestaltung weist die erfindungsgemäße Verbundscheibe eine Heizfunktion auf. Die Heizfunktion kann die gesamte Scheibenfläche oder auch nur Teile davon betreffen. Solche Heizfunktionen können beispielsweise durch in die thermoplastische Zwischenschicht eingelagerte Drähte oder durch eine elektrisch leitfähige Beschichtung auf einer der Glasscheiben oder einer Folie der Zwischenschicht realisiert sein.

Weiterhin schlägt die Erfindung eine Verbundglas-Scheibe mit einer erfindungsgemäßen thermoplastischen Folie, entsprechende Herstellungsverfahren für die thermoplastische Folie beziehungsweise die Verbundglas-Scheibe sowie eine Head-Up-Display-Anordnung und die Verwendung von thermoplastischer Folie als auch hiermit ausgestatteter Verbundglas-Scheiben vor.

Die erfindungsgemäße thermoplastische Folie mit veränderlicher Dicke kann eine Folie mit geräuschmindernder Wirkung sein (eine sogenannte Akustik-Folie). Solche Folien bestehen typischerweise aus mindestens drei Lagen, wobei die mittlere Lage eine höhere Plastizität oder Elastizität aufweist als die sie umgebenden äußeren Lagen, beispielsweise infolge eines höheren Anteils an Weichmachern.

Die Verbundglasscheibe kann neben der erfindungsgemäßen thermoplastischen Folie eine getönte Einlage enthalten. Solche Einlagen sind typischerweise im oberen Bereich der Verbundglasscheibe/Windschutzscheibe angeordnet und sollen die Störung oder Blendung des Fahrers durch Sonneneinstrahlung verringern. Sie werden gemeinhin als "Shaded Band" bezeichnet.

Die Verbundglasscheibe kann eine funktionelle Beschichtung aufweisen, beispielweise eine IR-reflektierende oder IR-absorbierende Beschichtung, eine UV-reflektierende oder UVabsorbierende Beschichtung, eine Beschichtung niedriger Emissivität, eine heizbare Beschichtung. Die funktionelle Beschichtung ist bevorzugt auf einer der zur Keileinlage hingewandten Oberflächen einer der Glasscheiben aufgebracht, wo sie vor Korrosion und Beschädigung geschützt ist.

Die Verbundglasscheibe kann auch eine Einlagefolie mit einer funktionellen Beschichtung zwischen den Glasscheiben enthalten, beispielsweise aus Polyethylenterephthalat (PET). Solche beschichteten PET-Folien, beispielsweise mit IR-reflektierenden Beschichtungen, sind kommerziell verfügbar und lassen sich daher leicht in Verbundgläser einbringen.

Ausführungsformen der vorliegenden Erfindung werden in exemplarischer Weise mit Bezug auf die angehängten Zeichnungen beschrieben. Es zeigt:

Fig. 1   den prinzipiellen Zusammenhang der Entstehung von Doppelbildern in Transmission,

Fig. 2   den prinzipiellen Zusammenhang der Entstehung von Geisterbildern in Reflexion,

Fig. 3   einen exemplarischen Aufbau einer Verbundglas-Scheibe mit einer keilförmigen Zwischenlage,

Fig. 4   ein exemplarisches Keilwinkelprofil zur Kompensation von Doppelbildern in Transmission,

Fig. 5   eine exemplarische Anordnung, welche den Zusammenhang verschiedener Augenpositionen in Bezug auf ein HUD-Display aufzeigt,

Fig. 6   exemplarisch ermittelte Keilwinkelwerte für verschiedene Eckpunkte eines HUD Bereiches, welche zu unterschiedlichen Augenpositionen korrespondieren,

Fig. 7   ein exemplarisches Keilwinkelprofil zur Kompensation von Geisterbildern in Reflexion,

Fig. 8   eine kombinierte Ansicht eines exemplarischen Keilwinkelprofils zur Kompensation von Doppelbildern in Transmission in einzelnen Abschnitten und zur Kompensation von Geisterbildern in Reflexion in einem anderen Abschnitt,

Fig. 9   eine kombinierte Ansicht wie in Figur 8, wobei das Keilwinkelprofil zur Kompensation von Doppelbildern in Transmission in einzelnen Abschnitten durch eine Näherungskurve ersetzt ist,

Fig. 10   eine kombinierte Ansicht wie in Figur 9, wobei zusätzlich im Abschnitt zur Kompensation von Geisterbildern in Reflexion die Kompensation von Doppelbildern in Transmission berücksichtigt ist,

Fig. 11   eine kombinierte Ansicht wie in Figur 8, wobei die Abschnitte zur Kompensation von Doppelbildern in Transmission Übergangsbereiche zur Anpassung an das Keilwinkelprofil zur Kompensation von Geisterbildern in Reflexion aufweist,

Fig. 12   eine beispielhafte Verteilung von Doppelbildwinkeln auf einer Verbundglas-Scheibe, und

Fig. 13   eine beispielhafte Verteilung des Abstands des Geisterbilds zum gewünschten HUD-Bild auf einem HUD-Bereich einer Verbundglas-Scheibe.

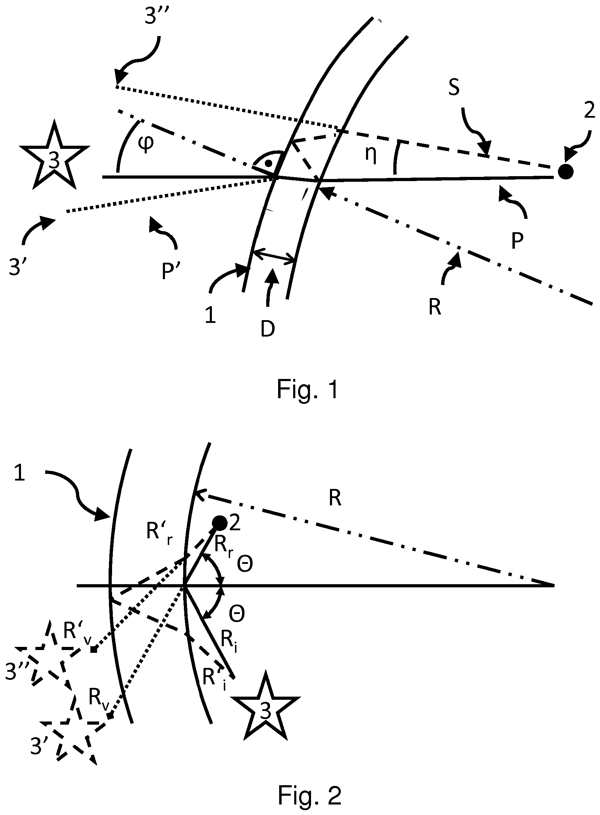

In Figur 1 ist der prinzipielle Zusammenhang der Entstehung von Doppelbildern in Transmission anhand eines Strahlenbilds dargestellt. Dabei wird eine gebogene Scheibe 1 angenommen. Die gebogene Scheibe weist am Ort des Eintritts eines Strahls in die gebogene Glas-Scheibe 1 einen Krümmungsradius R+D auf. Von einer Lichtquelle 3 wird Licht ausgestrahlt. Dieses Licht trifft auf die Scheibe und wird gemäß den bekannten Brechungsgesetzen beim Übergang von Luft zu Glas an der ersten Grenzfläche und von Glas zu Luft an der zweiten Grenzfläche gebrochen und trifft in das Auge 2 eines Betrachters. Dieser Strahl ist als durchgezogene Linie P dargestellt. Aus der Sicht des Betrachters scheint die Lichtquelle 3 am Ort 3' befindlich zu sein. Dies ist als Strahl P' dargestellt. Neben diesem als Primärstrahl bezeichneten Strahl P wird an der zweiten Grenzfläche Glas/Luft der Strahl nur teilweise in der oben beschriebenen Weise gebrochen; ein kleinerer Anteil wird an der zweiten Grenzfläche reflektiert und wird an der ersten Grenzfläche ein weiteres Mal reflektiert bevor der Strahl durch die zweite Grenzfläche tritt und in das Auge 2 des Betrachters trifft. Dieser Strahl, der sogenannte Sekundärstrahl, ist als gestrichelte Linie S dargestellt. Aus Sicht des Betrachters scheint die Lichtquelle 3 auch am Ort 3" befindlich zu sein. Der von dem Primärstrahl P' und dem Sekundärstrahl S eingeschlossene Winkel $\eta$ ist der so genannte Doppelbildwinkel.

Um diesem Doppelbild zu begegnen, ist ein Keilwinkel zwischen den zwei in Figur 1 im Wesentlichen parallel angenommen Grenzschichten vorgesehen. Nach J. P. Aclocque "Doppelbilder als störender optischer Fehler der Windschutzscheibe" in Z. Glastechn. Ber. 193 (1970) S. 193-198 lässt sich der Doppelbildwinkel in Abhängigkeit von dem Biegeradius der Glas-Scheibe und dem Einfallswinkel des Lichtstrahls nach folgender Beziehung berechnen:

$$\eta = \frac{2d}{R} \cdot \frac{\sin \varphi}{\sqrt{n^2 - \sin^2 \varphi}},$$

wobei $\eta$ den Doppelbildwinkel, n den Brechungsindex des Glases, d die Dicke der Glas-Scheibe, R den Biegeradius der Glas-Scheibe am Ort des einfallenden Lichtstrahls, und $\varphi$ den Einfallswinkel des Lichtstrahls zur Normalen auf die Tangente zur Scheibe bezeichnen.

Bei ebenen Glas-Scheiben ist der Doppelbildwinkel $\eta$ gemäß

$$\eta = 2 \cdot \delta \cdot \frac{\sqrt{n^2 - \sin^2 \varphi}}{\cos \varphi}$$

abhängig von dem durch die Glasoberflächen gebildeten Keilwinkel $\delta$.

Somit kann durch Gleichsetzung der zuvor genannten Formeln der notwendige Keilwinkel für die Eliminierung des Doppelbilds berechnet werden:

$$\delta = \frac{d}{R} \cdot \frac{\cos \varphi \cdot \sin \varphi}{n^2 - \sin^2 \varphi}.$$

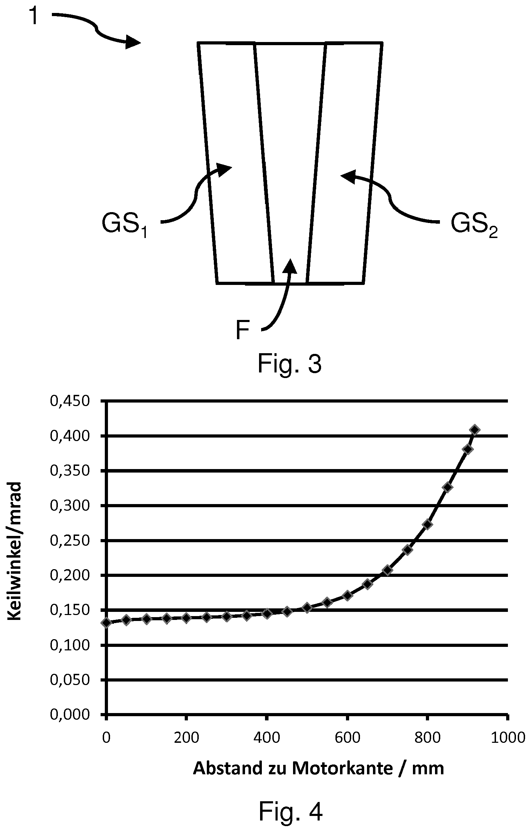

In aller Regel wird dieser Keilwinkel dadurch realisiert, dass bei Verbundglas-Scheiben 1 eine keilförmige Zwischenschicht F zwischen eine erste Glas-Schicht $GS_1$ und eine zweite Glas-Schicht $GS_2$ eingelegt wird, siehe Figur 3. Dabei kann in aller Regel vereinfachend davon ausgegangen werden, dass der Brechungsindex n konstant ist, da der Unterschied des Brechungsindex der Zwischenschicht F und den Glas-Schichten $GS_1$, $GS_2$ eher gering ist, sodass durch den geringen Unterschied kaum eine Wirkung ausgeht.

Auch bei gebogenen Windschutzscheiben kann diese Idee angewendet werden. In aller Regel werden hierzu vereinfachend der Einfallswinkel und der Biegeradius für einen Referenzaugpunkt angenommen, und der damit ermittelte Keilwinkel für die gesamte Windschutzscheibe angewendet. Bei großen Verbundglas-Scheiben 1, sogenannten Panoramascheiben, und/oder stärker gebogenen Verbundglas-Scheiben 1 ist diese Herangehensweise jedoch nicht mehr ausreichend, sodass hier in aller Regel ein in vertikaler Richtung sich ändernder Keilwinkelverlauf zu bestimmen ist. Dann kann z.B. durch punktweise Berechnung entlang einer gedachten vertikalen Mittellinie einer Verbundglas-Scheibe und eventueller Interpolation ein Kompensationskeilwinkelprofil $\delta$ bestimmt werden. Für die Berechnung der Doppelbildwinkel $\eta$ und der entsprechenden lokalen Kompensationskeilwinkel $\delta$ kann man die Anordnung wählen, wie sie in der Prüfvorschrift ECE R43 Annex 3 für die Bestimmung des Doppelbildwinkels empfohlen wird. Bei dieser Anordnung werden die Doppelbildwinkel ermittelt, wenn der Kopf des Fahrers sich von einer unteren Position in vertikaler Richtung bis in eine obere Endposition bewegt. Das heißt, die Blickrichtung des Fahrers bleibt immer horizontal. Alternativ oder zusätzlich kann eine Anordnung gewählt werden, bei der der Doppelbildwinkel von einer mittleren gleich bleibenden Position des Fahrers aus (Augpunkt) berechnet wird, wobei sich der Sichtwinkel des Fahrers durch die Windschutzscheibe ändert. Dabei kann das Ergebnis unterschiedlicher Bestimmungsvarianten auch gewichtet in ein Gesamtergebnis überführt werden.

Ein beispielhaftes Keilwinkelprofil, d.h. ein Verlauf der Keilwinkel in Abhängigkeit des Abstands zur Motorkante, d.h. zum unteren Ende einer Verbundglas-Scheibe 1, ist in Figur 4 angegeben. Dabei ist deutlich zu erkennen, dass ein gemäß obiger Formeln optimierter Keilwinkel $\delta$ für eine gedachte virtuelle Mittellinie bei der beispielhaften Windschutzscheibe am unteren Ende zunächst bei Werten von unter 0.15 mrad beginnt und mit zunehmendem Abstand zur Motorkante, d.h. zum oberen Ende der Verbundglas-Scheibe 1 hin, zu Werten von über 0.4 mrad ansteigt.

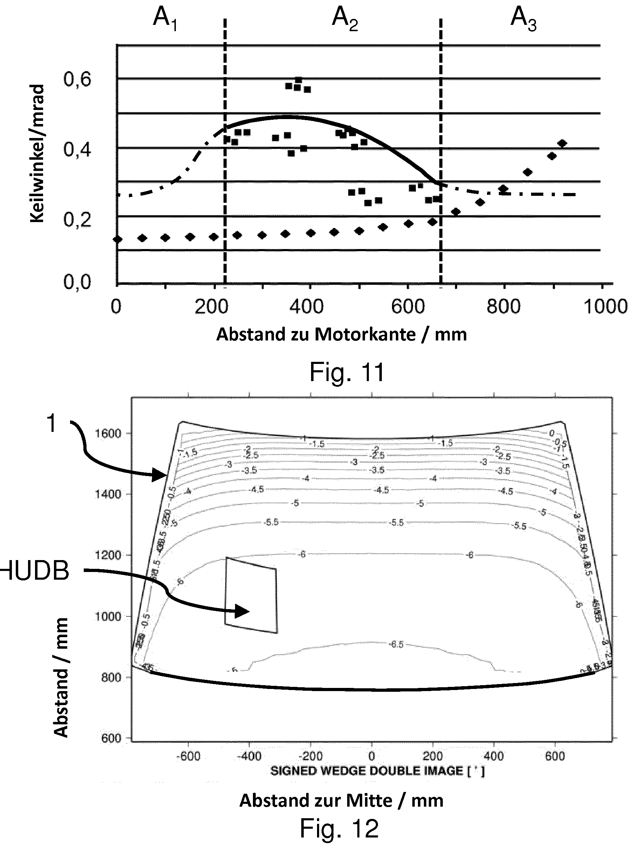

In einem beispielhaften Verfahren wird der zur Kompensation des Doppelbildes erforderliche Keilwinkel in Abhängigkeit von dem lokalen Einfallswinkel und einem lokalen Biegeradius der Verbundglas-Scheibe 1 rechnerisch ermittelt, und der sich daraus ergebende Verlauf des Doppelbildwinkels $\eta$ bestimmt. Beispielhaft ist ein mögliches Ergebnis von Doppelbildwinkel $\eta$ in Figur 12 für eine Verbundglas-Scheibe 1 eines Fahrzeuges gezeigt. Dabei ist eine beispielhafte Verbundglas-Scheibe 1 auf ein xy Koordinatensystem abgebildet, wobei die horizontale Achse einen Abstand in Bezug auf die Mitte der Verbundglas-Scheibe 1 angibt und die vertikale Achse einen Abstand in Bezug auf eine nicht dargestellte untere Ebene angibt. Es bleibt anzumerken, dass die Darstellung der Scheibe nicht notwendigerweise ihrem tatsächlichen Einbau entspricht, sondern in der Figur so dargestellt ist, dass eine möglichst große Projektionsfläche vorhanden ist. Dabei ist der sich ergebende Doppelbildwinkel in Bogenminuten angeben.

In Bezug auf Head-Up Displays entsteht ein dem Phänomen der Doppelbilder ähnliches Problem, dass als Geisterbild bezeichnet wird. In Figur 2 ist der prinzipielle Zusammenhang der Entstehung von Geisterbildern in Reflexion anhand eines Strahlenbilds dargestellt. Dabei wird eine gebogene Glas-Scheibe 1 angenommen. Die gebogene Glas-Scheibe 1 weist am Ort des Eintritts eines Strahls in die gebogene Glas-Scheibe 1 einen Krümmungsradius R auf. Von einer Lichtquelle 3, welche repräsentativ für ein Head-Up-Display HUD steht, wird Licht ausgestrahlt. Dieses Licht trifft entlang des Strahls $R_i$ von innen unter einem Winkel $\Theta$ auf die Glas-Scheibe 1 und wird dort unter demselben Winkel $\Theta$ reflektiert. Der reflektierte Strahl $R_r$ trifft in das Auge 2 eines Betrachters. Dieser Strahlengang ist als durchgezogene Linie dargestellt. Aus der Sicht des Betrachters scheint die Lichtquelle 3 virtuell am Ort 3', d.h. vor der Glas-Scheibe 1, befindlich zu sein. Dies ist als Strahl $R_v$ dargestellt. Neben diesem ersten Stahl trifft ein weiterer Strahl in das Auge 2 des Betrachters. Dieser Strahl $R'_i$ stammt ebenfalls von der Lichtquelle 3. Allerdings dringt dieser Strahl $R'_i$ gemäß den bekannten Brechungsgesetzen in die Glas-Scheibe 1 an der inneren Grenzfläche Luft/Glas ein und wird an der äußeren Grenzfläche Glas/Luft reflektiert, bevor der Strahl durch die innere Grenzfläche tritt und als Strahl $R'_r$ in das Auge 2 des Betrachters trifft. Die innere Grenzfläche bezeichnet die Grenzfläche, die näher zum Betrachter befindlich ist, während die äußere Grenzfläche die Grenzfläche bezeichnet, die weiter entfernt vom Betrachter ist. Dieser Strahlengang ist als gestrichelte Linie dargestellt. Aus Sicht des Betrachters scheint die Lichtquelle 3 virtuell auch am Ort 3", d.h. ebenfalls vor der Glas-Scheibe 1, befindlich zu sein. Dies ist als Strahl $R'_v$ dargestellt.

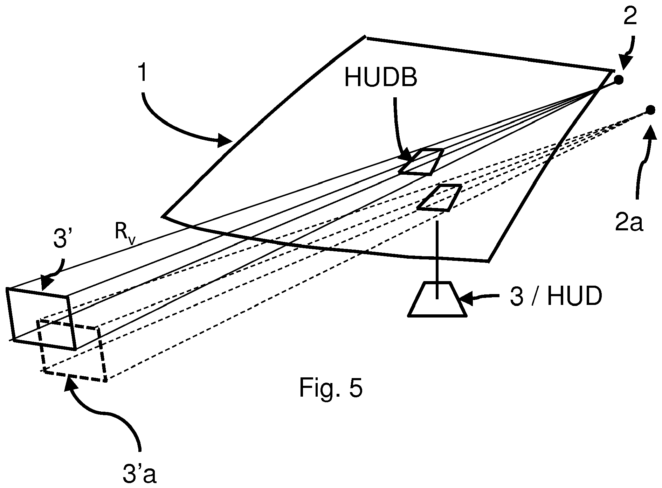

Um diesem Problem zu begegnen, kann der Keilwinkel so geändert werden, dass der an der äußeren Grenzfläche reflektierte Strahl $R'_r$ als auch der an der inneren Grenzfläche reflektierte Strahl $R_r$ in Bezug auf das Auge 2 des Betrachters sich überlagern, d.h. der an der äußeren Grenzfläche reflektierte Strahl tritt an der Stelle der Reflexion des an der inneren Grenzfläche auftreffenden Strahls aus. Wird dies nur für eine einzige Augposition durchgeführt, wie nach dem Stand der Technik üblich, so kann der hieraus ermittelte Keilwinkel jedoch zu nicht optimalen Ergebnissen führen. Dies ist unter anderem dadurch zu erklären, dass sowohl die Körpergröße von Fahrern, für die die HUD-Displays primär bestimmt sind, als auch die Sitzposition sehr unterschiedlich sind, sodass es eine Vielzahl möglicher Augposition gibt. Dies ist in Figur 5 verdeutlicht. Dort sind auf der rechten Seite der Abbildung 5 zwei mögliche Augpositionen 2 und 2a dargestellt. In Abhängigkeit von der Augposition 2 oder 2a ergibt sich die Position des Bilds 3' oder 3'a. Auch der an der Bilderzeugung beteiligte Bereich der Scheibe im Head-Up-Displaybereich HUDB ("aktiver Bereich") ist von der Augposition 2, 2a abhängig. Modellhaft können das Projektorbild 3 und das virtuelle Bild 3', 3'a als vollflächige Rechtecke aufgefasst werden. Die Verbindungslinien von der Augposition 2, 2a zu den Ecken der Rechtecke sind in Figur 5 eingezeichnet. Die Schnittpunkte dieser Verbindungslinien mit der Scheibe ergeben die Ecken eines Trapezes, welches modellhaft den "aktiven Bereich" der Scheibe beschreiben soll. Diese Trapeze sind innerhalb des Head-Up-Displaybereichs HUDB auf der Glas-Scheibe 1 in der Figur exemplarisch dargestellt. Somit befindet sich das virtuelle Display abhängig von der Augposition an unterschiedlichen Stellen und entsprechend ergibt sich für jede dieser Augpositionen ein unter Umständen anderer Wert für einen optimierten Keilwinkel. Zudem soll an dieser Stelle nicht unerwähnt bleiben, dass ein Keilwinkel ausschließlich optimiert für Geisterbilder in aller Regel zu einer Überkompensation von Doppelbildern führt, sodass die hierdurch hervorgerufenen Doppelbilder wiederum problematisch in Bezug auf die Wahrnehmung des Betrachters und/oder die Einhaltung gesetzlicher Prüfvorschriften und/oder die Einhaltung von Kundenspezifikationen in Bezug auf Doppelbilder sind.

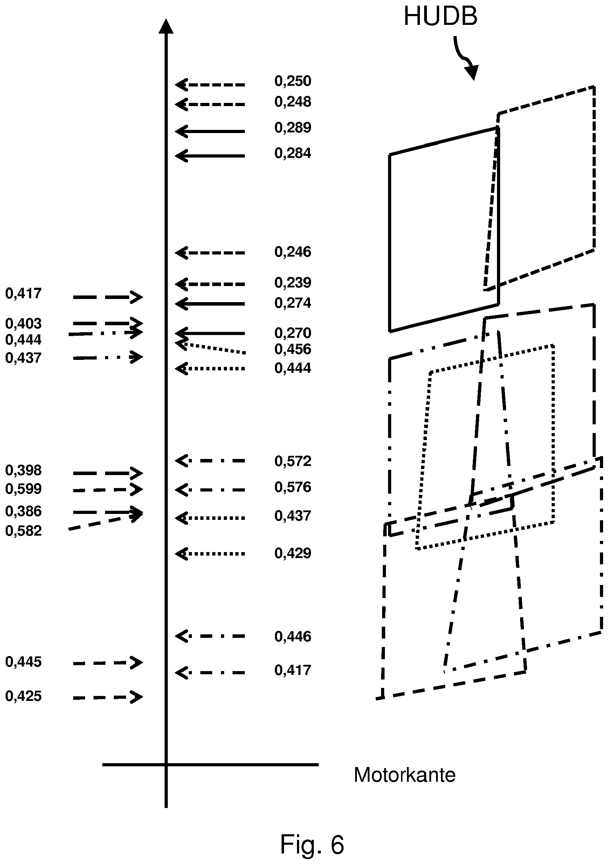

In Figur 6 werden für unterschiedliche Positionen des Auges 2 in Bezug auf die Verbundglas-Scheibe 1 die resultierenden Positionen eines HUD in Form der vorstehend beschriebenen Trapeze (als "aktive" Bereiche) innerhalb eines Head-Up-Displaybereichs HUDB wiedergegeben. Zur besseren Unterscheidung sind die Trapeze mit unterschiedlichen Linienarten ausgeführt. Zur Verdeutlichung sind für eine Anzahl von Trapezen die zugehörigen ermittelten Keilwinkel in Bezug auf die Ecken der Trapeze angegeben und auf der linken Seite relativ zum Abstand zur Motorkante eingetragen.

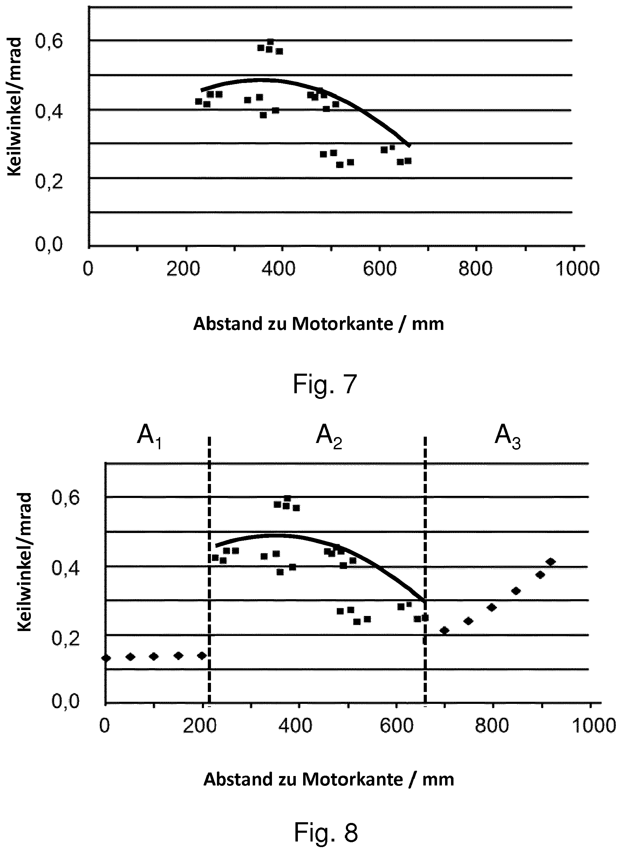

Zur besseren Visualisierung sind diese Werte auch in Figur 7 als Keilwinkel in Bezug auf den Abstand zur Motorkante, d.h. dem unteren Ende der Verbundglas-Scheibe 1, dargestellt. Einzelne ermittelte Werte sind dabei als Quadrat markiert.

Aus diesen Werten kann eine Näherungskurve ermittelt werden, die in Figur 7 als durchgezogene Linie beispielhaft dargestellt ist. Diese Näherungskurve kann erster Ordnung oder aber höherer Ordnung sein.

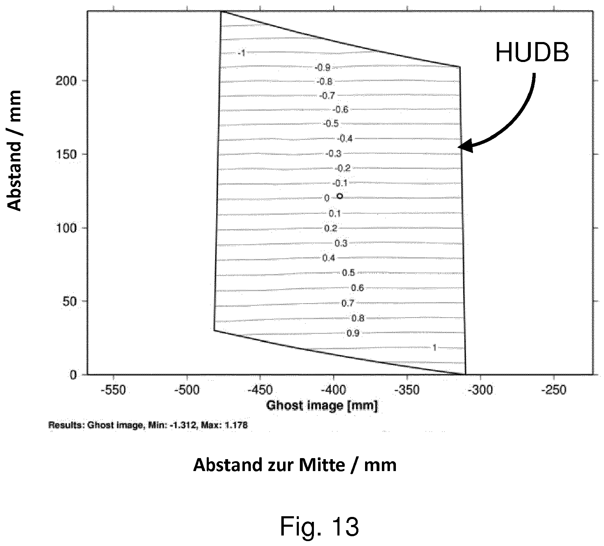

In einem beispielhaften Verfahren wird der zur Kompensation des Doppelbildes erforderliche Keilwinkel in Abhängigkeit von dem lokalen Einfallswinkel und einem lokalen Biegeradius der Verbundglas-Scheibe 1 rechnerisch ermittelt, und der sich daraus ergebende Verlauf des Keilwinkels bestimmt. Beispielhaft ist ein mögliches Ergebnis von Orten verschoben wahrgenommener Geisterbildern in Figur 13 für einen Head-Up-Displaybereich HUDB einer Verbundglas-Scheibe 1 eines Fahrzeuges gezeigt. Dieser Head-Up-Displaybereich HUDB korrespondiert zum Ausschnitt HUDB in Figur 12. Insofern bezieht sich die horizontale Achse wiederum auf einen Abstand in Bezug auf die Mitte der Verbundglas-Scheibe 1. Die vertikale Achse ist hier jedoch auf den tiefsten Punkt des Head-Up-Displaybereich HUDB bezogen. Dabei zeigt die Darstellung den Abstand zwischen einem Primärstrahl und einem Sekundärstrahl in mm.

Für viele Einsatzbereiche ist jedoch sowohl eine Minimierung von Doppelbildern als auch von Geisterbildern wünschenswert. Um dies zu erreichen, schlägt die Erfindung eine thermoplastische Folie F für eine Verbundglas-Scheibe 1 mit abschnittsweiser nichtlinearkontinuierlicher Keileinlage in vertikaler Richtung vor. Typischerweise ist z.B. im Fahrzeugbau die Verbundglas-Scheibe 1 in vertikaler Richtung an einem unteren Ende aus der Sicht eines Betrachters weiter vom Betrachter entfernt als an einem oberen Ende.

Wie zuvor in Bezug auf Figur 3 beschrieben, ist die erfindungsgemäße thermoplastische Folie F bei einer hiermit ausgerüsteten Verbundglas-Scheibe 1 zwischen zwei Glas-Schichten $GS_1$, $GS_2$ befindlich. Dabei kann die thermoplastische Folie F, wie nachfolgend anhand der Figuren 7 bis 9 gezeigt wird, in drei Abschnitte $A_1$, $A_2$, $A_3$ unterteilt werden.

Dabei weist die thermoplastische Folie F zumindest abschnittsweise in vertikaler Richtung ein kontinuierliches nicht-lineares Keilwinkelprofil auf. In einem ersten Abschnitt $A_1$ ist das Keilwinkelprofil so gestaltet, dass Doppelbilder in Transmission vermieden werden. Entsprechend Figur 3 weist das Keilwinkelprofil mit zunehmender Distanz vom unteren Ende, d.h. beim Einsatz in einer Verbundglas-Scheibe 1 für ein Fahrzeug an der Motorkante, einen konstanten oder zumindest abschnittsweise variablen Keilwinkel auf. In einem zweiten Abschnitt $A_2$, der an den ersten Abschnitt $A_1$ anschließt, ist das Keilwinkelprofil so gestaltet, dass Geisterbilder in Reflexion vermieden werden. Entsprechend Figur 5 weist das Keilwinkelprofil einen variablen Keilwinkel auf, wobei der Keilwinkel von einem unteren Ende zu einem oberen Ende eine Funktion des Abstands zum unteren Ende oder zum oberen Ende ist, wobei die Funktion eine Funktion zumindest zweiten Grades ist. Dieser zweite Abschnitt $A_2$ ist dabei so gestaltet, dass er im Wesentlichen Geisterbilder eines Head-Up-Displays HUD minimiert. In einem dritten Abschnitt $A_3$, der an den zweiten Abschnitt $A_2$ anschließt, ist das Keilwinkelprofil so gestaltet, dass wiederum Geisterbilder in Transmission vermieden werden. Entsprechend Figur 3 weist das Keilwinkelprofil mit zunehmender Distanz vom unteren Ende, d.h. beim Einsatz in einer Verbundglas-Scheibe 1 für ein Fahrzeug an der Motorkante, einen konstanten oder zumindest abschnittsweise variablen Keilwinkel auf. Ein Keilwinkel im dritten Abschnitt $A_3$ ist dabei im Wesentlichen gleich oder größer als der Keilwinkel am unteren Ende des ersten Abschnittes $A_1$.

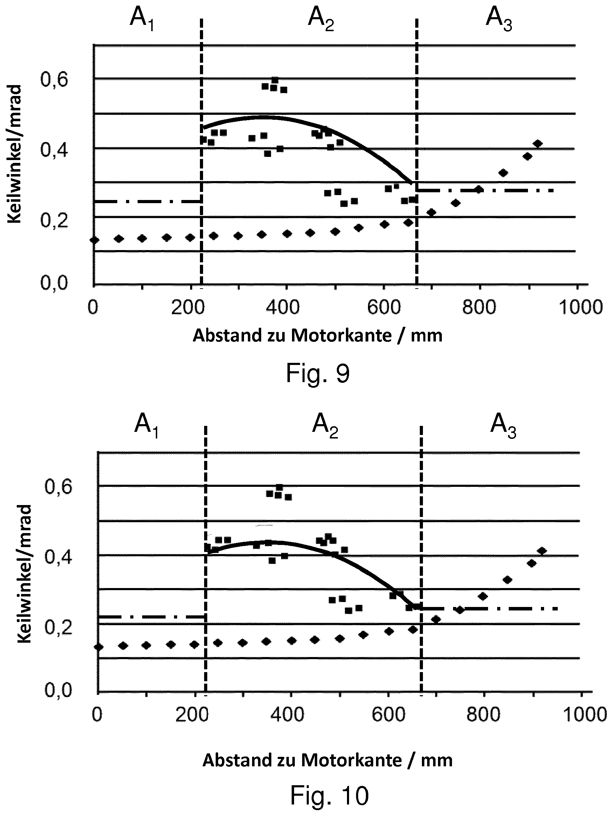

Im Prinzip wäre ein Keilwinkelprofil wie in Figur 8 angezeigt erstrebenswert, da bei diesem in ersten Abschnitt $A_1$ und im letzten Abschnitt $A_3$ der Keilwinkel optimal für eine Kompensation von Doppelbildern für eine beispielhafte Verbundglas-Scheibe 1 gewählt wäre, während im Abschnitt $A_2$ der Keilwinkel optimiert für eine Anzahl von Augenpositionen für eine Kompensation von Geisterbildern für eine beispielhafte Verbundglas-Scheibe 1 gewählt wäre. Mit der möglichen Ausgestaltung, dass das Keilwinkelprofil im ersten Abschnitt $A_1$ und/oder dritten Abschnitt $A_3$ im Wesentlichen einen konstanten Keilwinkel aufweist, kann unter dem Gesichtspunkt günstiger Herstellungskosten bei nur geringen Abweichungen von einem idealen Wert immer noch ein zufriedenstellendes Ergebnis erzielt werden. Ein derartiges Beispiel ist in Figur 9 gezeigt, bei dem im ersten Abschnitt $A_1$ und im dritten Abschnitt $A_3$ ein konstanter Keilwinkel entsprechend der strich-punktierten Linien angenommen wird. Dabei können auch andere Parameter, wie z.B. ein maximaler Keilwinkel oder eine maximale Keilwinkeländerung Berücksichtigung finden. Solche Parameter können z.B. dadurch bedingt sein, dass eine Änderung der Dicke der Verbundglas-Scheibe 1 einen maximalen Wert nicht übersteigen darf. So kann z.B. vorgesehen sein, dass im ersten Abschnitt eine gewisse "Überkompensation" stattfindet, d.h. der Keilwinkel größer als der ideale Keilwinkel ist, während im dritten Abschnitt der Keilwinkel kleiner als der ideal Keilwinkel ist, sodass eine gewisse "Unterkompensation" auftritt.

Im zweiten Abschnitt ist im Wesentlichen eine Optimierung in Bezug auf Minimierung von Geisterbildern vorgesehen. Dabei tritt in aller Regel auch eine (Über-)Kompensation von Doppelbildern in Transmission auf. In diesem zweiten Abschnitt kann je nach Anforderungen vorgesehen sein, dass die Kompensation von Geisterbildern zu Gunsten einer geringeren Überkompensation von Doppelbildern nur sub-optimal ausgeführt wird. Dies wird z.B. in Figur 10 gezeigt. Dabei kann klassisch ein Mittelwert gebildet sein oder jede andere Form einer Gewichtung entweder als Funktion des Ortes oder aber über den gesamten Abschnitt $A_2$ vorgesehen werden. Im Prinzip ist es auch möglich im zweiten Abschnitt $A_2$ einen linearen Keilwinkelverlauf zu verwenden.

Der Übergang des Keilwinkelverlaufs zwischen dem ersten und zweiten Abschnitt ist in den Figuren 9 und 10 der Einfachheit halber stufenartig dargestellt. In der Realität wird der Übergang in der Regel vorteilhafterweise einen kontinuierlicheren Verlauf aufweisen. Von besonderem Vorteil ist jedoch ein Keilwinkelverlauf, bei dem der Keilwinkel eine Funktion zweiter oder höherer Ordnung ist, wie dies in den Figuren bis 7 bis 11 angedeutet ist. In diesem Fall können die Übergänge vom ersten Abschnitt in den zweiten Abschnitt als auch von dem zweiten Abschnitt in den dritten Abschnitt so gestaltet werden, dass es nur zu geringen Sprüngen in der Steigung kommt. Dies wirkt sich positiv auf die Dynamik der störenden Bilder aus. Unter Dynamik wird hierbei verstanden, dass Geisterbilder durch Bewegung des Kopfes und einer damit entstehenden anderen Position des Auges 2 plötzlich stärker auftreten. Dies tritt umso mehr auf, je stärker bei einer Fehlkompensation der Keilwinkel sich ändert. In einem beispielhaften Verfahren wird der Keilwinkel in Bezug auf verschiedene Augenpositionen ermittelt und die Funktion des Keilwinkelverlaufs als ein Kurvenfit an die hieraus ermittelten Keilwinkel ermittelt.

Eine derartige thermoplastische Folie F kann zumindest einen Stoff ausgewählt aus der Gruppe aufweisend Polybutylenterephthalat (PBT), Polycarbonat (PC), Polyethylenterephthalat (PET) und Polyethylennaphthalat (PEN), Polyvinylchlorid (PVC), Polyvinylfluoride (PVF), Polyvinylbutyral (PVB), Ethylenvinylacetat (EVA), Polyacrylat (PA), Polymethylmethacrylat (PMMA), Polyurethan (PUR), und/oder Gemische und Copolymere davon enthält enthalten. Dabei kann die Auswahl eines geeigneten Materials für die thermoplastische Folie F z.B. von den Eigenschaften der Folie in Bezug auf den Brechungsindex als auch die erzielbare Festigkeit in Bezug auf eine gewisse Foliendicke abhängig sein. Prinzipiell ist die Erfindung nicht auf ein bestimmtes Material für eine thermoplastische Folie F eingeschränkt.

Um Doppelbilder zu minimieren, wird bei den in aller Regel unter einem Winkel eingesetzten Verbundglas-Scheiben 1 im Fahrzeugbau ein Keilwinkelprofil bevorzugt, bei dem in vertikaler Richtung der Keilwinkel am unteren Rand geringer ist als der Keilwinkel am oberen Rand, d.h. der Keilwinkel in der Nachbarschaft der Motorhaube wird geringer sein als der Keilwinkel in der Nachbarschaft der Dachkante eines typischen Fahrzeugs. Dies ist auch erfindungsgemäß vorgesehen. Von besonderem Vorteil ist, wenn zwischen dem ersten Abschnitt $A_1$ und dem zweiten Abschnitt $A_2$ ein Übergangsbereich wie in Fig. 11 gezeigt vorgesehen ist, in dem der Keilwinkel entsprechend den Anforderungen an den ersten Abschnitt $A_1$ und den zweiten Abschnitt $A_2$ gleitend ineinander überführt werden. Gleichermaßen vorteilhaft ist es, wenn zwischen dem zweiten Abschnitt $A_2$ und dem dritten Abschnitt $A_3$ ein Übergangsbereich wie in Figur 11 gezeigt vorgesehen ist, in dem der Keilwinkel entsprechend den Anforderungen an den zweiten Abschnitt $A_2$ und den dritten Abschnitt $A_3$ gleitend ineinander überführt werden. Hierdurch werden sprungartige Änderungen der Keilwinkel als auch der Keilwinkelsteigung vermieden, sodass der Übergang zwischen den einzelnen Bereichen vom Betrachter als fließender empfunden wird. Zudem kann ein weicherer Übergang auch geeignet sein mögliche Spannungen in den Verbundglas-Scheiben zu vermeiden.

Wie zuvor beschrieben, kann der Verlauf des Keilwinkelprofils im gesamten zweiten Abschnitt $A_2$ als eine Mittelung zwischen einem reflexionsoptimierten Wert und einem transmissionsoptimierten Wert verstanden werden, um sowohl Doppelbilder als auch Geisterbilder zu minimieren. Dabei erlaubt eine stärkere Gewichtung der Geisterbildkompensation immer noch eine ausreichende Doppelbildkompensation. Um unterschiedlichen Augenpositionen Rechnung tragen zu können, wird mit einer zunehmenden Anzahl von bestimmten Keilwinkeln für bestimmte Augenpositionen in Bezug auf Geisterbilder optimiert. Aus den ermittelten Werten kann z.B. wie in den Figuren 7 bis 11 gezeigt ein Keilwinkelprofil als eine Funktion zweiter oder höherer Ordnung approximiert werden. Dabei können auch die ermittelten Werte für eine Optimierung in Bezug auf Doppelbilder übernommen werden und somit eine Näherungskurve für den zweiten Abschnitt $A_2$ und/oder auch den Abschnitt $A_1$ und/oder den Abschnitt $A_3$ bestimmt werden.

In Ausführungsformen der Erfindung kann zudem vorgesehen sein, dass der Keilwinkelverlauf im zweiten Abschnitt nur weniger als 0.35 mrad, bevorzug weniger als 0.25 mrad, weiter bevorzugt 0.15 mrad, besonders bevorzugt 0.1 mrad, von einem Keilwinkelverlauf optimiert zur Vermeidung von Geisterbildern in Transmission abweicht.

Zudem kann in Ausführungsformen der Erfindung vorgesehen sein, dass in einem Übergangsbereich zwischen dem ersten Abschnitt $A_1$ und dem zweiten Abschnitt $A_2$ und/oder dem zweiten Abschnitt $A_2$ und dem dritten Abschnitt $A_3$ der Keilwinkelverlauf so ist, dass der Keilwinkel weniger als 0.2 mrad, bevorzugt 0.15 mrad, besonders bevorzugt 0.1 mrad, von einem Keilwinkelverlauf optimiert zur Vermeidung von Geisterbildern in Transmission abweicht.

Beispielsweise ist in Figur 11 im Abschnitt $A_1$ und im Abschnitt $A_3$ der Keilwinkelverlauf so angenähert, dass eine Keilwinkeldifferenz von circa 0.15 mrad eingehalten wird. Auch im Abschnitt $A_2$ ist der Keilwinkelverlauf so gewählt, dass eine Keilwinkeldifferenz von weniger als 0.2 mrad nach unten (d.h. circa 0.5 mrad statt 0.5 mrad bei 400 mm Abstand von der unteren Kante). Dadurch kann eine empirisch als nicht-störend empfundene ermittelte Abweichung bei der Gestaltung eines Keilwinkelprofils berücksichtigt werden, sodass die Herstellungskosten optimiert werden können.

Für die Fertigung ist es besonders vorteilhaft, wenn die erfindungsgemäße thermoplastische Folie F am unteren Rand eine Dicke von weniger als 1 mm, bevorzugt weniger als 0.9 mm, und bevorzugt eine Dicke von mehr als 0.3 mm, insbesondere mehr als 0.6 mm, aufweist. Hierdurch kann die Folie in bewährter Weise bei der Herstellung von Verbundglas-Scheiben 1 verwendet werden, ohne dass es kostentreibender spezieller Vorrichtungen bedürfte. Somit kann ein Aufbau einer Verbundglas-Scheibe 1 wie in Figur 3 gezeigt auch mit der erfindungsgemäßen thermoplastischen Folie F zwischen einer ersten Glas-Schicht $GS_1$ und einer zweite Glas-Schicht $GS_2$ erzielt werden. Solche Verbundglas-Scheiben 1 weisen eine Dicke von 1 mm bis 8 mm, bevorzugt 3.5 bis 5.3 mm, auf und können somit ohne weiteres wie herkömmliche Verbundglas-Scheiben weiter verarbeitet werden. Dabei weisen die erste Glas-Schicht $GS_1$ und/oder die zweite Glas-Schicht $GS_2$ der Verbundglas-Scheibe 1 typischerweise eine Dicke ausgewählt aus einem Bereich von etwa 1 mm bis 3 mm, insbesondere 1.4 mm bis 2.6 mm auf, beispielsweise 2.1 mm. Hierdurch werden die geforderten Eigenschaften an einen Splitterschutz und/oder einen Schallschutz gewährleistet. Mit der thermoplastischen Folie F kann somit in bewährter Weise eine Verbundglas-Scheibe 1 hergestellt werden, indem eine erste Glas-Schicht $GS_1$ und eine zweite Glas-Schicht $GS_2$ erhalten werden, wobei die thermoplastische Folie F auf die erste Glas-Schicht $GS_1$ aufgelegt wird, und bei Verwendung eines Autoklaven-Prozesses auf die thermoplastische Folie die zweite Glas-Schicht $GS_2$ aufgelegt wird. Anschließend werden die thermoplastische Folie F mit der ersten Glas-Schicht $GS_1$ und der zweiten Glas-Schicht $GS_2$ im Autoklaven und unter Wärme- und Druckeinwirkung verbunden.

Die erfindungsgemäße thermoplastische Folie F ist nicht nur in einem Autoklav-Prozess verwendbar, sondern kann z.B. auch mit einem Vakuum-Thermo-Ofen-Prozess oder dergleichen autoklavenfreien Prozessen verwendet werden. Auch ist es prinzipiell möglich, zunächst nur eine erste Glas-Schicht $GS_1$ mit der thermoplastischen Folie F nach Auflage zu verbinden und anschließend die zweite Glas-Schicht $GS_2$ aufzulegen und mit der auf die Glas-Schicht $GS_1$ vorverbundenen thermoplastischen Folie F zu verbinden.

Derartig hergestellte thermoplastische Folien F können in Verbundglas-Scheiben 1 in Fahrzeugen, insbesondere als Windschutzscheibe zur Anzeige eines Head-Up-Displays, oder Gebäuden oder als Informationsdisplay verwendet werden. Eine Verwendung in einer Head-Up-Display-Anordnung ist beispielsweise in Figur 5 zu erkennen. Dort beleuchtet ein Projektor als Lichtquelle einen beispielhaften Head-Up-Display-Bereich HUDB einer Verbundglas-Scheibe 1, welche mit einer erfindungsgemäßen thermoplastischen Folie F ausgestattet ist. Dabei werden im Head-Up-Display-Bereich HUDB Geisterbilder des Projektors minimiert während die gesamte Verbundglas-Scheibe 1 zudem auch Doppelbilder in Transmission (nicht dargestellt) vermindert.

Obwohl in den Figuren im Allgemeinen nur ein Head-Up-Displaybereich HUDB gezeigt ist, ist die Erfindung nicht darauf beschränkt. Z.B. können auch mehrere Head-Up-Displaybereiche HUDB z.B. für Rechts- und Linkslenker oder aber für unterschiedliche Zwecke, wie z.B. Infotainment-System und Fahrassistenzsysteme vorgesehen sein. Dabei kann auch vorgesehen sein, dass z.B. bei Head-Up-Displaybereichen HUDB, die im Wesentlichen dem Infotainment dienen, lediglich eine Minimierung der Geisterbilder vorgesehen ist, während bei Fahrassistenzsystemen sowohl eine Minimierung der Geisterbilder als auch eine Minimierung der Doppelbilder angestrebt wird.

Im Ergebnis erlaubt die Erfindung eine Verbesserung in Bezug auf die Minimierung von Geisterbildern von Head-Up Displays für eine Vielzahl von Augenpositionen, ohne wesentlich mehr Geisterbilder außerhalb des Head-Up-Displaybereiches HUDB zu erzeugen. Weiterhin kann mittels der Erfindung auch erreicht werden, dass im Head-Up-Displaybereich HUDB als auch in den anderen Bereichen Doppelbilder in Transmission reduziert werden. Zudem lassen sich größere Head-Up-Displaybereiche HUDB als auch komplexere Windschutzscheibendesigns mit der vorgestellten Erfindung realisieren.

## Patentansprüche

1. Thermoplastische Folie (F) für eine Verbundglas-Scheibe (1) mit Keileinlage,

- welche zumindest abschnittsweise in vertikaler Richtung ein Keilwinkelprofil mit einer kontinuierlichen nicht-linearen Änderung der Dicke aufweist,
- wobei das Keilwinkelprofil einen ersten Abschnitt ($A_1$) aufweist, der zur Vermeidung von Doppelbildern in Transmission einen konstanten oder zumindest abschnittsweise variablen Keilwinkel aufweist,
- wobei das Keilwinkelprofil einen zweiten Abschnitt ($A_2$) aufweist, der an den ersten Abschnitt ($A_1$) anschließt, wobei der zweite Abschnitt ($A_2$) zur Vermeidung von Geisterbildern in Reflexion einen variablen Keilwinkel aufweist, wobei der Keilwinkel von einem unteren Ende zu einem oberen Ende eine Funktion des Abstandes zum unteren Ende oder zum oberen Ende ist, wobei die Funktion eine Funktion zumindest zweiten Grades ist, wobei der zweite Abschnitt ($A_2$) im Wesentlichen Geisterbilder eines Head-Up-Display minimiert,
- wobei das Keilwinkelprofil einen dritten Abschnitt ($A_3$) aufweist, der an den zweiten Abschnitt ($A_2$) anschließt, wobei der dritte Abschnitt ($A_3$) zur Vermeidung von Doppelbildern in Transmission einen konstanten oder zumindest abschnittsweise variablen Keilwinkel aufweist, wobei ein Keilwinkel im dritten Abschnitt ($A_3$) im Wesentlichen gleich oder größer ist als der Keilwinkel am unteren Ende des ersten Abschnittes ($A_1$),
- wobei der dritte Abschnitt ($A_3$) einen größeren Abstand von einem unteren Rand hat als der zweite Abschnitt ($A_2$),

und wobei in vertikaler Richtung der Keilwinkel am unteren Rand geringer ist als der Keilwinkel am oberen Rand.

2. Thermoplastische Folie (F) nach Anspruch 1, **dadurch gekennzeichnet, dass** die thermoplastische Folie (F) zumindest einen Stoff ausgewählt aus der Gruppe aufweisend Polybutylenterephthalat (PBT), Polycarbonat (PC), Polyethylenterephthalat (PET) und Polyethylennaphthalat (PEN), Polyvinylchlorid (PVC), Polyvinylfluoride (PVF), Polyvinylbutyral (PVB), Ethylenvinylacetat (EVA), Polyacrylat (PA), Polymethylmethacrylat (PMMA), Polyurethan (PUR), und/oder Gemische und Copolymere davon enthält.

3. Thermoplastische Folie (F) nach einem der vorhergehenden Ansprüche, **dadurch gekennzeichnet, dass** zwischen dem ersten Abschnitt ($A_1$) und dem zweiten Abschnitt ($A_2$) ein Übergangsbereich vorgesehen ist, in dem der Keilwinkel entsprechend den Anforderungen an den ersten Abschnitt ($A_1$) und den zweiten Abschnitt ($A_2$) gleitend ineinander überführt werden.

4. Thermoplastische Folie (F) nach einem der vorhergehenden Ansprüche, **dadurch gekennzeichnet, dass** zwischen dem zweiten Abschnitt ($A_2$) und dem dritten Abschnitt ($A_3$) ein Übergangsbereich vorgesehen ist, in dem der Keilwinkel entsprechend den Anforderungen an den zweiten Abschnitt ($A_2$) und den dritten Abschnitt ($A_3$) gleitend ineinander überführt werden.

5. Thermoplastische Folie (F) nach einem der vorhergehenden Ansprüche, **dadurch gekennzeichnet, dass** die thermoplastische Folie (F) am unteren Rand eine Dicke von weniger als 1 mm, bevorzugt weniger als 0.9 mm, und bevorzugt eine Dicke von mehr als 0.3 mm, insbesondere mehr als 0.6 mm, am unteren Ende aufweist.

6. Verbundglas-Scheibe (1), aufweisend

   - eine erste Glas-Schicht ($GS_1$) und eine zweite Glas-Schicht ($GS_2$),
   - eine thermoplastische Folie (F) nach einem der vorhergehenden Ansprüche,
   - wobei sich die thermoplastische Folie (F) zwischen der ersten Glas-Schicht ($GS_1$) und der zweiten Glas-Schicht ($GS_2$) befindet.

7. Verbundglas-Scheibe (1) nach Anspruch 6, wobei die Verbundglas-Scheibe (1) eine Dicke von 1 mm bis 8 mm, bevorzugt 3.5 bis 5.3 mm, am unteren Ende aufweist.

8. Verbundglas-Scheibe (1) nach Anspruch 6 oder 7, wobei die erste Glas-Schicht ($GS_1$) und/oder die zweite Glas-Schicht ($GS_2$) eine Dicke ausgewählt aus einem Bereich von etwa 1 mm bis 3 mm, bevorzugt 1.4 bis 2.6 mm am unteren Ende aufweist.

9. Verfahren zur Herstellung einer thermoplastischen Folie (F) nach einem der Ansprüche 1 bis 5, **dadurch gekennzeichnet, dass** der zur Kompensation des Doppelbildes erforderliche Keilwinkel in Abhängigkeit von dem lokalen Einfallswinkel und einem lokalen Biegeradius der Verbundglas-Scheibe rechnerisch ermittelt, und der sich daraus ergebende Verlauf des Keilwinkels bestimmt wird.

10. Verfahren nach Anspruch 9, **dadurch gekennzeichnet, dass** zumindest im zweiten Abschnitt ($A_2$) zur Kompensation von Geisterbildern erforderliche Keilwinkel in Bezug auf verschiedene Augenpositionen ermittelt wird und die Funktion des Keilwinkelverlaufs als ein Kurvenfit an die hieraus ermittelten Keilwinkel ermittelt wird.

11. Verfahren zur Herstellung einer Verbundglas-Scheibe (1) nach einem der Ansprüche 6 bis 8, aufweisend die Schritte:

   - Erhalten der ersten Glas-Schicht ($GS_1$),
   - Erhalten der zweiten Glas-Schicht ($GS_2$),
   - Auflegen der thermoplastischen Folie (F) auf die erste Glas-Schicht ($GS_1$),
   - Auflegen der zweiten Glas-Schicht ($GS_2$) auf die thermoplastische Folie (F),
   - Verbinden der ersten Glas-Schicht ($GS_1$) mit der thermoplastischen Folie (F), und
   - Verbinden der zweiten Glas-Schicht ($Gs_2$) mit der thermoplastischen Folie (F).

12. Verfahren zur Herstellung einer Verbundglas-Scheibe (1) gemäß Anspruch 11, **dadurch gekennzeichnet, dass** der Keilwinkel gemäß Anspruch 9 oder 10 bestimmt wird.

13. Head-Up-Display-Anordnung, aufweisend einen Projektor (3) zur Beleuchtung eines Head-Up-Display-Bereiches einer Verbundglas-Scheibe (1) und eine Verbundglas-Scheibe (1) ausgestattet mit einer thermoplastischen Folie (F) gemäß einem der Ansprüche 1 bis 5, wobei der Projektor (3) im Betrieb im Wesentlichen den zweiten Abschnitt beleuchtet.

14. Verwendung einer thermoplastischen Folie (F) nach einem der vorhergehenden Ansprüche 1 bis 5 für Verbundglas-Scheiben (1) in Fahrzeugen, insbesondere als Windschutzscheibe zur Anzeige eines Head-Up-Displays, oder Gebäuden oder als Informationsdisplay.

15. Verwendung einer Verbundglas-Scheibe (1) nach einem der Ansprüche 6 bis 8 in Fahrzeugen, insbesondere als Windschutzscheibe zur Anzeige eines Head-Up-Displays, oder Gebäuden oder als Informationsdisplay.

**Claims**

1. Thermoplastic film (F) for a laminated glass pane (1) with a wedge insert

   - which has, in the vertical direction at least in sections, a wedge-angle profile with a continuous nonlinear change in thickness,
   - wherein the wedge-angle profile has a first section ($A_1$), which has, for preventing double images in transmission, a wedge angle that is constant or is variable at least in sections,
   - wherein the wedge-angle profile has a second section ($A_2$), which adjoins the first section ($A_1$), wherein the second section ($A_2$) has, for preventing ghost images in reflection, a variable wedge angle, wherein the wedge angle from a lower end to an upper end is a function of the distance to the lower end or to the upper end, wherein the function is at least a second degree function, wherein the second section ($A_2$) substantially minimizes ghost images of a head-up display,
   - wherein the wedge-angle profile has a third

section ($A_3$), which adjoins the second section ($A_2$), wherein the third section ($A_3$) has, for preventing double images in transmission, a wedge angle that is constant or is variable at least in sections, wherein a wedge angle in the third section ($A_3$) is substantially equal to or greater than the wedge angle at the lower end of the first section ($A_1$)

- wherein the third section ($A_3$) has a greater distance from a lower edge than the second section ($A_2$),

and wherein in the vertical direction, the wedge angle at the lower edge is smaller than the wedge angle at the upper edge.

2. Thermoplastic film (F) according to claim 1, **characterized in that** the thermoplastic film (F) contains at least one material selected from the group comprising polybutylene terephthalate (PBT), polycarbonate (PC), polyethylene terephthalate (PET) and polyethylene naphthalate (PEN), polyvinyl chloride (PVC), polyvinyl fluorides (PVF), polyvinyl butyral (PVB), ethylene vinyl acetate (EVA), polyacrylate (PA), polymethyl methacrylate (PMMA), polyurethane (PUR), and/or mixtures and copolymers thereof.

3. Thermoplastic film (F) according to one of the preceding claims, **characterized in that**, between the first section ($A_1$) and the second section ($A_2$), a transition region is provided, in which the wedge angle is smoothly transformed according to the requirements of the first section ($A_1$) and of the second section ($A_2$).

4. Thermoplastic film (F) according to one of the preceding claims, **characterized in that**, between the second section ($A_2$) and the third section ($A_3$), a transition region is provided, in which the wedge-angle is smoothly transformed according to the requirements of the second section ($A_2$) and of the third section ($A_3$).

5. Thermoplastic film (F) according to one of the preceding claims, **characterized in that** the thermoplastic film (F) has at the lower edge a thickness of less than 1 mm, preferably less than 0.9 mm, and preferably a thickness of more than 0.3 mm, in particular more than 0.6 mm at the lower end.

6. Laminated glass pane (1), comprising

   - a first glass layer ($GS_1$) and a second glass layer ($GS_2$),
   - a thermoplastic film (F) according to one of the preceding claims,
   - wherein the thermoplastic film (F) is situated between the first glass layer ($GS_1$) and the second glass layer ($GS_2$).

7. Laminated glass pane (1) according to claim 6, wherein the laminated glass pane (1) has a thickness of 1 mm to 8 mm, preferably 3.5 to 5.3 mm, at the lower end.

8. Laminated glass pane (1) according to claim 6 or 7, wherein the first glass layer ($GS_1$) and/or the second glass layer ($GS_2$) has a thickness selected from a range of roughly 1 mm to 3 mm, preferably 1.4 to 2.6 mm at the lower end.

9. Method for producing a thermoplastic film (F) according to one of claims 1 through 5, **characterized in that** the wedge angle required for compensation of the double image is calculated as a function of the local angle of incidence and a local radius of curvature of the laminated glass pane, and the resultant progression of the wedge angle is determined.

10. Method according to claim 9, **characterized in that**, at least in the second section ($A_2$) the wedge angle required for compensation of ghost images is determined relative to different eye positions and the function of the wedge-angle progression is calculated as a curve fit on the wedge-angle determined therefrom.

11. Method for producing a laminated glass pane (1) according to one of claims 6 through 8, comprising the steps:

   - obtaining the first glass layer ($GS_1$),
   - obtaining the second glass layer ($GS_2$),
   - placing the thermoplastic film (F) on the first glass layer ($GS_1$),
   - placing the second glass layer ($GS_2$) on the thermoplastic film (F),
   - bonding the first glass layer ($GS_1$) to the thermoplastic film (F), and
   - bonding the second glass layer ($GS_2$) to the thermoplastic film (F).

12. Method for producing a laminated glass pane (1) according to claim 11, **characterized in that** the wedge angle is determined in accordance with claim 9 or 10.

13. Head up display arrangement, comprising a projector (3) for illuminating a head-up display region of a laminated glass pane (1) and a laminated glass pane (1) equipped with a thermoplastic film (F) according to one of claims 1 through 5, wherein, during operation, the projector (3) substantially illuminates the second section.

14. Use of a thermoplastic film (F) according to one of the preceding claims 1 through 5 for laminated glass panes (1) in motor vehicles, in particular as a windshield for displaying a head-up display, or buildings or as an information display.

**15.** Use of a laminated glass pane (1) according to one of claims 6 through 8 in motor vehicles, in particular as a windshield for displaying a head-up display, or buildings or as an information display.

**Revendications**

**1.** Film thermoplastique (F) pour une vitre en verre feuilleté (1) avec un insert en forme de calage

- qui présente, dans la direction verticale, au moins dans les sections, un profil d'angle en calage avec une variation non linéaire continue de l'épaisseur,
- dans lequel le profil d'angle en calage a une première section ($A_1$), qui a, pour empêcher les images doubles dans la transmission, un angle en calage qui est constant ou qui est variable au moins dans les sections,
- dans lequel le profil d'angle en calage a une seconde section ($A_2$), qui est adjacente à la première section ($A_1$), dans lequel la seconde section ($A_2$) a, pour empêcher les images fantômes en réflexion, un angle en calage variable, dans lequel l'angle en calage d'une extrémité inférieure à une extrémité supérieure est une fonction de la distance à l'extrémité inférieure ou à l'extrémité supérieure, dans lequel la fonction est au moins une fonction du second degré, dans lequel la seconde section ($A_2$) minimise sensiblement les images fantômes d'un affichage tête haute,
- dans lequel le profil d'angle de calage a une troisième section ($A_3$), qui est adjacente à la deuxième section ($A_2$), dans lequel la troisième section ($A_3$) a, pour empêcher les images doubles dans la transmission, un angle de calage qui est constant ou qui est variable au moins dans les sections, dans lequel un angle de calage dans la troisième section ($A_3$) est sensiblement égal ou supérieur à l'angle de calage à l'extrémité inférieure de la première section ($A_1$),
- dans lequel la troisième section ($A_3$) a une plus grande distance d'un bord inférieur que la deuxième section ($A_2$),

et dans lequel, dans la direction verticale, l'angle de calage au niveau du bord inférieur est inférieur à l'angle de calage au niveau du bord supérieur.

**2.** Film thermoplastique (F) selon la revendication 1, **caractérisé en ce que** le film thermoplastique (F) contient au moins un matériau choisi dans le groupe comprenant le polybutylène téréphtalate (PBT), le polycarbonate (PC), le polyéthylène téréphtalate (PET) et le polyéthylène naphtalate (PEN), le chlorure de polyvinyle (PVC), les fluorures de polyvinyle (PVF), le butyral de polyvinyle (PVB), l'éthylène-acétate de vinyle (EVA), le polyacrylate (PA), le polyméthacrylate de méthyle (PMMA), le polyuréthane (PUR), et/ou leurs mélanges et copolymères.

**3.** Film thermoplastique (F) selon l'une des revendications précédentes, **caractérisé en ce qu'**il est prévu, entre la première section ($A_1$) et la deuxième section ($A_2$), une zone de transition dans laquelle l'angle de calage est transformé en douceur selon les exigences de la première section ($A_1$) et de la deuxième section ($A_2$).

**4.** Film thermoplastique (F) selon l'une des revendications précédentes, **caractérisé en ce que**, entre la deuxième section ($A_2$) et la troisième section ($A_3$), une région de transition est prévue, dans laquelle l'angle de calage est transformé de manière régulière selon les exigences de la deuxième section ($A_2$) et de la troisième section ($A_3$).

**5.** Film thermoplastique (F) selon l'une des revendications précédentes, **caractérisé en ce que** le film thermoplastique (F) présente au niveau du bord inférieur une épaisseur inférieure à 1 mm, de préférence inférieure à 0,9 mm, et de préférence une épaisseur supérieure à 0,3 mm, notamment supérieure à 0,6 mm à l'extrémité inférieure.

**6.** Vitre en verre feuilleté (1), comprenant

- une première couche de verre ($GS_1$) et une deuxième couche de verre ($GS_2$),
- un film thermoplastique (F) selon l'une des revendications précédentes,
- dans lequel le film thermoplastique (F) est situé entre la première couche de verre ($GS_1$) et la deuxième couche de verre ($GS_2$).

**7.** Vitre en verre feuilleté (1) selon la revendication 6, dans laquelle la vitre en verre feuilleté (1) présente une épaisseur de 1 mm à 8 mm, de préférence de 3,5 à 5,3 mm, à l'extrémité inférieure.

**8.** Vitre en verre feuilleté (1) selon la revendication 6 ou 7, dans laquelle la première couche de verre ($GS_1$) et/ou la deuxième couche de verre ($GS_2$) a une épaisseur choisie dans une gamme d'environ 1 mm à 3 mm, de préférence 1,4 à 2,6 mm à l'extrémité inférieure.

**9.** Procédé de fabrication d'un film thermoplastique (F) selon l'une des revendications 1 à 5, **caractérisé en ce qu'**on calcule l'angle de calage nécessaire à la compensation de la double image en fonction de l'angle d'incidence local et d'un rayon de courbure local de la vitre en verre feuilleté, et on détermine la progression résultante de l'angle de calage.

10. Procédé selon la revendication 9, **caractérisé en ce que**, au moins dans la deuxième section (A2), on détermine l'angle de calage nécessaire à la compensation des images fantômes par rapport à différentes positions des yeux et on calcule la fonction de la progression de l'angle de calage comme un ajustement de courbe sur l'angle de calage déterminé à partir de celui-ci.

11. Procédé de fabrication d'une vitre en verre feuilleté (1) selon l'une des revendications 6 à 8, comprenant les étapes suivantes :

   - obtenir de la première couche de verre (GS$_1$),
   - obtenir de la deuxième couche de verre (GS$_2$),
   - placer le film thermoplastique (F) sur la première couche de verre (GS$_1$),
   - placer la deuxième couche de verre (GS$_2$) sur le film thermoplastique (F),
   - coller la première couche de verre (GS$_1$) sur le film thermoplastique (F), et
   - lier la deuxième couche de verre (GS$_2$) au film thermoplastique (F).

12. Procédé de fabrication d'une vitre en verre feuilleté (1) selon la revendication 11, **caractérisé en ce que** l'angle de calage est déterminé selon la revendication 9 ou 10.

13. Dispositif d'affichage tête haute, comprenant un projecteur (3) pour éclairer une zone d'affichage tête haute d'une vitre en verre feuilleté (1) et une vitre en verre feuilleté (1) équipée d'un film thermoplastique (F) selon l'une des revendications 1 à 5, dans lequel, en fonctionnement, le projecteur (3) éclaire sensiblement la deuxième section.

14. Utilisation d'un film thermoplastique (F) selon l'une des revendications précédentes 1 à 5 pour des vitres en verre feuilleté (1) dans des véhicules automobiles, notamment comme pare-brise pour l'affichage d'un affichage tête haute, ou des bâtiments ou comme affichage d'informations.

15. Utilisation d'une vitre en verre feuilleté (1) selon l'une des revendications 6 à 8 dans des véhicules automobiles, notamment comme pare-brise pour l'affichage d'un affichage tête haute, ou des bâtiments ou comme affichage d'informations.

Fig. 1

Fig. 2

1

GS$_1$

GS$_2$

F

Fig. 3

**Keilwinkel/mrad**

0,450
0,400
0,350
0,300
0,250
0,200
0,150
0,100
0,050
0,000

0        200       400       600       800      1000

**Abstand zu Motorkante / mm**

Fig. 4

Fig. 5

HUDB

| | |
|---|---|
| ← – – – · – | 0,250 |
| ← – – – – | 0,248 |
| ← | 0,289 |
| ← | 0,284 |

| | | |
|---|---|---|
| | ← – – – – | 0,246 |
| | ← – – – · | 0,239 |
| 0,417 – – –→ | ← | 0,274 |
| 0,403 – · – ·→ | ← | 0,270 |
| 0,444 – – · →| ←· · · · · · | 0,456 |
| 0,437 – · · →| ←· · · · · · · | 0,444 |

| | | |
|---|---|---|
| 0,398 – – –→ | ←· – · – | 0,572 |
| 0,599 – – –→ | ←· – · – | 0,576 |
| 0,386 – – →| ←· · · · · · · · | 0,437 |
| 0,582 – – →| ←· · · · · · · · | 0,429 |

| | | |
|---|---|---|
| | ←· – · – | 0,446 |
| 0,445 – – –→ | ←· – · – | 0,417 |
| 0,425 – – –→ | | |

Motorkante

Fig. 6

17

Fig. 7

Fig. 8

Fig. 9

Fig. 10

$A_1$   $A_2$   $A_3$

Fig. 11

Abstand zur Mitte / mm

Fig. 12

**Abstand zur Mitte / mm**

## Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100314900 A1

**In der Beschreibung aufgeführte Nicht-Patentliteratur**

- **J. P. ACLOCQUE.** Doppelbilder als störender optischer Fehler der Windschutzscheibe. *Z. Glastechn. Ber.,* 1970, vol. 193, 193-198